# FASCICULE DE BREVET EUROPEEN

(11) **EP 3 827 288 B1**
(45) Date de publication et mention de la délivrance du brevet: **11.09.2024**
(21) Numéro de dépôt: 19758422.0
(22) Date de dépôt: 03.07.2019
(51) Int. Cl.: G01V 1/00, G01V 1/30, G01V 1/36

(54) **PROCEDE ET DISPOSITIF DE SURVEILLANCE DU SOUS-SOL TERRESTRE SOUS UNE ZONE CIBLE**
VERFAHREN UND VORRICHTUNG ZUR ÜBERWACHUNG DES ERDBODENS UNTER EINER ZIELZONE
METHOD AND DEVICE FOR MONITORING THE SUBSOIL OF THE EARTH UNDER A TARGET ZONE

(30) Priorité: 24.07.2018 FR 1856857
(43) Date de publication de la demande: 02.06.2021
(73) Titulaire: SERCEL, 44470 Carquefou (FR)
(72) Inventeur: BARDAINNE, Thomas, 91300 Massy (FR); RONDELEUX, Baptiste, 91300 Massy (FR)
(74) Mandataire: Ipsilon
(86) Numéro de dépôt international: PCT/FR2019/051642
(87) Numéro de publication internationale: WO 2020/021177

(56) Documents cités:
- SHAN DOU ET AL: "Distributed Acoustic Sensing for Seismic Monitoring of The Near Surface: A Traffic-Noise Interferometry Case Study", SCIENTIFIC REPORTS, vol. 7, no. 1, 14 September 2017 (2017-09-14), pages 1 - 12, XP055581491, DOI: 10.1038/s41598-017-11986-4
- SHAN DOU ET AL: "Supplementary Information for: Distributed Acoustic Sensing for Seismic Monitoring 2 of The Near Surface: A Traffic-Noise Interferometry 3 Case Study", SCIENTIFIC REPORTS, 14 September 2017 (2017-09-14), pages 1 - 8, XP055581497, Retrieved from the Internet <URL:https://static-content.springer.com/esm/art:10.1038/s41598-017-11986-4/MediaObjects/41598_2017_11986_MOESM1_ESM.pdf> [retrieved on 20190416]
- NAKATA NORI: "Near-surface velocity imaging using traffic-induced high-frequency ground motion", SEG TECHNICAL PROGRAM EXPANDED ABSTRACTS 2017, 17 August 2017 (2017-08-17), pages 2940 - 2945, XP055581504, DOI: 10.1190/segam2017-17587176.1
- DIEGO A. QUIROS ET AL: "Seismic interferometry of railroad induced ground motions: body and surface wave imaging", GEOPHYSICAL JOURNAL INTERNATIONAL., vol. 205, no. 1, 19 February 2016 (2016-02-19), GB, pages 301 - 313, XP055581833, ISSN: 0956-540X, DOI: 10.1093/gji/ggw033

## Description

La présente invention se rapporte à un procédé et un dispositif de surveillance du sous-sol terrestre sous une zone cible.

Elle appartient au domaine de l'analyse sismique et trouve application notamment dans les activités de surveillance du sous-sol terrestre et de détection d'anomalies dans ce dernier, comme la détection de cavités sous des voies ferrées, des routes, des bâtiments ou encore des aéroports.

Afin de garantir la sécurité des utilisateurs de ces infrastructures terrestres, il est en effet important de procéder à une surveillance instantanée, temporaire ou permanente du sous-sol, afin de détecter toute éventuelle anomalie souterraine telle qu'une cavité, susceptible de fragiliser les ouvrages construits en surface.

Dans un article intitulé « Seismic interferometry of railroad induced ground motions: body and surface wave imaging », publié dans Geophys. J. Int. 205, 2016, pages 301-313, Diego A. QUIROS et al. ont proposé une méthode de génération de trajets virtuels de propagation le long d'une voie ferrée, à partir de l'analyse interférométrique du bruit ambiant, capté par une ligne unique de récepteurs ou capteurs d'ondes sismiques déployée le long de cette voie ferrée.

Cette méthode présente l'inconvénient de limiter l'information obtenue au sous-sol localisé directement sous la ligne de capteurs et ne permet pas de produire une image tridimensionnelle du sous-sol sous la voie ferrée, mais concerne une image bidimensionnelle d'une ligne souterraine, parallèle à la voie ferrée.

De plus, dans cette méthode purement passive, le bruit des trains est mélangé à tous les autres bruits et utilisé lorsque ceux-ci sont éloignés des récepteurs afin d'être alignés avec la ligne de récepteurs. Le bruit capté par les récepteurs est donc faible et peu propice à l'imagerie.

Les documents "Near-surface velocity imaging using traffic induced high-frequency ground motion", de N. NAKATA et coll. (SEG 2017, p. 2940-2945) et "Distributed acoustic sensing for seismic monitoring of the near surface: a traffic-noise interferometry case study" de S. DOU et coll., Scientific Reports 2017; 7:11620 présentent des approches similaires, avec les mêmes inconvénients d'imagerie 2D à proximité des zones à étudier.

La présente invention a pour but de remédier aux inconvénients de l'art antérieur.

Dans ce but, la présente invention propose un procédé de surveillance du sous-sol terrestre sous une zone cible conforme à la revendication 1.

Des capteurs d'ondes sismiques sont disposés de part et d'autre de la zone cible, et une source de bruit sismique identifiée se déplace hors de la zone cible et même hors de l'espace défini par les capteurs. Le procédé comprend l'enregistrement sur des périodes déterminées des ondes provenant de la source par des couples de capteurs, les périodes étant choisies pour que la source et les couples de capteurs soient alignés, la zone cible étant localisée entre les capteurs des couples considérés, puis la reconstruction par interférométrie d'un sismogramme à partir de ces enregistrements. Le sismogramme génère alors une image du sous-sol sous la zone cible.

Ainsi, le fait d'utiliser, d'une part, une source de bruit sismique mobile dont les caractéristiques sont connues grâce à l'analyse du signal lui-même et ne nécessitent pas d'information a priori et d'autre part, au moins deux capteurs qui pendant une certaine période de temps vont être alignés avec cette source de bruit, permet une surveillance passive dans l'espace et le temps, c'est-à-dire à quatre dimensions, de grande amplitude et à haute résolution, de la partie du sous-sol située sous la surface où sont disposés les capteurs, à la condition que la source de bruit mobile soit alignée avec le couple de capteurs à au moins un instant donné.

Ainsi, si un couple de capteurs est disposé de part et d'autre d'une zone cible (par exemple d'une voie de chemin de fer), il est possible d'engendrer une image du sous-sol sous cette zone cible si une source mobile (par exemple un train sur une autre voie) passe à proximité et s'aligne à au moins un instant donné avec le couple de capteurs. La multiplication des capteurs autour de la zone cible, par exemple en les positionnant parallèlement de chaque côté d'une voie ferrée, ou même sur chacun des rails d'une voie ferrée, permet de générer l'image tridimensionnelle de la zone cible grâce au mouvement de la source.

Dans un mode particulier de réalisation, le procédé comporte en outre, préalablement à l'étape de reconstruction, une étape de prétraitement des ondes sismiques enregistrées.

Cela permet d'obtenir des signaux de qualité optimale, ce qui accroît la fiabilité de l'image du sous-sol obtenue.

Avantageusement, l'étape de prétraitement comporte des opérations de débruitage et de filtrage en fréquence.

De façon optionnelle, l'étape de prétraitement peut comporter une opération de blanchiment spectral et/ou une opération de binarisation.

Ce type d'opération permet de simplifier les traitements ultérieurs de reconstruction du sismogramme.

Dans un mode particulier de réalisation, lors de l'étape de reconstruction par interférométrie, on effectue au moins une opération d'intercorrélation de signaux issus des ondes sismiques respectivement enregistrées par les deux capteurs du couple de capteurs.

Cela permet de reconstruire efficacement le sismogramme.

Dans un mode particulier de réalisation, l'étape d'enregistrement est effectuée de façon continue dans le temps.

Cela permet de produire des états du sous-sol à une périodicité choisie, par exemple quotidienne ou hebdomadaire ou mensuelle.

Dans un mode particulier de réalisation, le procédé comporte en outre, à la suite de l'étape de reconstruction, une étape d'addition de signaux reconstruits du sismogramme provenant de plusieurs sources de bruit mobiles respectivement alignées avec le couple de capteurs pendant des périodes de temps distinctes.

Cette étape d'addition permet de renforcer la qualité et la fiabilité de la reconstruction.

Dans un mode particulier de réalisation, lors de l'étape d'enregistrement, on enregistre des ondes sismiques de surface.

Dans ce mode de réalisation, lors de l'étape de génération de l'image :
on détermine des courbes de dispersion des ondes de surface dans les signaux reconstruits du sismogramme dans une bande de fréquences prédéterminée ;
on réalise une tomographie de la vitesse des signaux reconstruits à partir des courbes de dispersion ; et
on effectue une inversion des vitesses d'ondes de surface des signaux reconstruits, de façon à produire un modèle de vitesse d'ondes P et S.

En variante, lors de l'étape d'enregistrement, on peut enregistrer des ondes sismiques réfractées.

Dans cette variante, lors de l'étape de génération de l'image :
on détermine les temps d'arrivée des signaux reconstruits du sismogramme correspondant aux ondes sismiques réfractées ; et
on réalise une tomographie des signaux reconstruits correspondant aux ondes réfractées P à partir des temps d'arrivée précités, de façon à produire un modèle de vitesse d'ondes P.

Selon des caractéristiques particulières possibles, on peut enregistrer des ondes sismiques réfléchies, les capteurs peuvent comporter au moins un géophone et/ou au moins un accéléromètre et/ou au moins un capteur basé sur l'utilisation de fibres optiques, par exemple de type DAS (capteur acoustique réparti, en anglais « Distributed Acoustic Sensing »), les capteurs peuvent être placés selon au moins deux lignes, ou sur des grilles de forme carrée ou hexagonale, et/ou peuvent être espacés régulièrement.

La zone cible précitée est une voie ferrée ou une route ou un autre ouvrage de génie civil, ou un bâtiment.

La zone cible peut être une première voie ferrée et la source peut être un train se déplaçant sur une deuxième voie ferrée sensiblement parallèle à la première voie ferrée. Les capteurs peuvent être disposés de façon régulièrement espacée sur deux lignes parallèles entourant la première voie ferrée.

Dans le même but que celui indiqué plus haut, la présente invention propose également un dispositif de surveillance du sous-sol terrestre sous une zone cible conforme à la revendication 14.

Les caractéristiques particulières et les avantages du dispositif étant similaires à ceux du procédé, ils ne sont pas répétés ici.

D'autres aspects et avantages de l'invention apparaîtront à la lecture de la description détaillée ci-après de modes particuliers de réalisation, donnés à titre d'exemples nullement limitatifs, en référence aux dessins annexés, dans lesquels :
- la figure 1 est un organigramme illustrant des étapes d'un procédé de surveillance du sous-sol terrestre sous une zone cible conforme à la présente invention, dans un mode particulier de réalisation ;
- la figure 2 est une vue schématique illustrant une configuration d'enregistrement d'ondes sismiques dans un exemple nullement limitatif où la zone cible est une voie ferrée ;
- la figure 3 est une vue schématique illustrant une configuration de reconstruction de trajets virtuels de propagation dans l'exemple de la figure 2 ;
- la figure 4 est une vue schématique illustrant une configuration de reconstruction de trajets virtuels de propagation suivant plusieurs azimuts, dans l'exemple de la figure 2 ;
- la figure 5 est une vue schématique illustrant une configuration de reconstruction de trajets virtuels de propagation suivant plusieurs azimuts et en utilisant plusieurs voies ferrées ; et
- la figure 6 est une vue schématique d'un mode préféré de réalisation de l'invention.

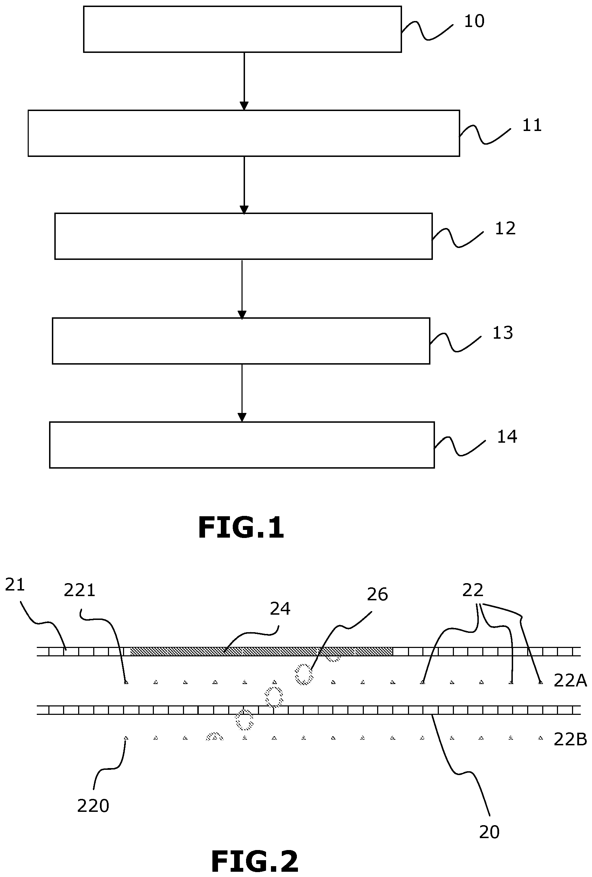

Comme le montre l'organigramme de la figure 1, au cours d'une première étape 10 du procédé de surveillance du sous-sol terrestre sous une zone cible conforme à l'invention, au moins pendant une période de temps prédéterminée, on enregistre des ondes sismiques.

Ces ondes sismiques proviennent d'une source mobile de bruit sismique, c'est-à-dire une source en déplacement et dont le déplacement produit du bruit. Cette source de bruit est connue au sens où elle est bien identifiée. Il ne s'agit donc pas d'un bruit ambiant d'origine non identifiée.

L'enregistrement de ces ondes sismiques est réalisé au moyen d'au moins un couple de capteurs disposés de façon à être alignés avec la source de bruit pendant la période de temps précitée.

Les couples de capteurs peuvent être disposés selon différents agencements, comme par exemple régulièrement espacés le long de lignes droites comme le montre la figure 2 décrite ci-après, mais ils peuvent aussi être espacés de façon irrégulière, suivant toutes sortes de courbes, ou sur des grilles régulières ou non de forme carrée ou hexagonale ou quelconque. Ils peuvent aussi être placés de façon aléatoire.

La figure 2 donne à titre d'exemple nullement limitatif une configuration d'enregistrement dans le cas où la zone cible est une voie ferrée 20. Néanmoins, l'invention s'applique tout aussi bien à une zone cible constituée par une route, ou encore un bâtiment ou une autre infrastructure, comme par exemple un aéroport.

Une pluralité de récepteurs ou capteurs d'ondes sismiques 22 est déployée le long de la voie ferrée 20, dite voie cible, de part et d'autre de celle-ci. Ces capteurs 22 sont répartis entre une « Ligne récepteur A » 22A et une « Ligne récepteur B » 22B. Les capteurs 22 peuvent par exemple comporter au moins un géophone et/ou au moins un accéléromètre et/ou au moins un capteur basé sur l'utilisation de fibres optiques, par exemple du type DAS (capteur acoustique réparti, en anglais « Distributed Acoustic Sensing »).

Sur chaque côté de la voie ferrée cible 20, les capteurs 22 peuvent par exemple être disposés à intervalles réguliers les uns des autres, par exemple à quelques mètres d'intervalle, en laissant par exemple 2 mètres entre chaque capteur 22.

Les capteurs 22 peuvent être placés à la surface du sol ou être légèrement enterrés, c'est-à-dire placés à quelques mètres sous la surface du sol. Ils peuvent être déployés sur ou sous le ballast, ou bien sur ou sous les rails ou encore dans un tunnel ferroviaire.

La pluralité de capteurs 22 comporte au moins un couple de capteurs 220, 221 disposés en regard l'un de l'autre, de part et d'autre de la voie ferrée 20, de façon transversale à celle-ci.

La source de bruit sismique mobile est un train 24 circulant sur une voie ferrée 21, dite voie source, distincte de la voie ferrée cible 20. Le bruit émis par le train 24 en mouvement est symbolisé sur le dessin par des flèches en forme de cercles 26. Ce bruit provient principalement du contact des roues du train 24 sur les rails de la voie ferrée 21.

L'ensemble comportant la pluralité de capteurs 22, la source 24 mobile de bruit sismique et un module adapté à réaliser les traitements du procédé de surveillance du sous-sol décrit ici, forme un dispositif de surveillance du sous-sol conforme à l'invention.

Si on considère le couple de capteurs 220, 221, il va se trouver dans l'alignement du train 24 pendant une période de temps prédéterminée définie par un premier instant où le point de contact de la première roue du train 24 avec le rail est sur la droite qui passe par le barycentre des capteurs 220 et 221 et un second instant où le point de contact de la dernière roue du train 24 avec le rail est sur la droite qui passe par le barycentre des capteurs 220 et 221.

Conformément à l'invention, pendant cette période de temps, les capteurs 220 et 221 enregistrent des ondes sismiques qui vont faire l'objet des traitements ultérieurs du procédé conforme à l'invention. Cette période de temps est prédéterminée, étant donné qu'on connaît les paramètres cinématiques du train 24, à savoir, sa position et sa vitesse à chaque instant. En ce sens, la source de bruit sismique mobile que constitue le train 24 est identifiée.

L'étape 10 d'enregistrement peut être limitée à cette période de temps prédéterminée. En variante, l'enregistrement peut avoir lieu de façon continue dans le temps.

En référence à l'organigramme de la figure 1, de façon optionnelle, l'étape 10 d'enregistrement des ondes sismiques peut être suivie d'une étape 11 de prétraitements des ondes sismiques enregistrées par les capteurs 22.

Ces prétraitements peuvent être de divers types et incluent au moins une phase de débruitage et une phase de filtrage en fréquence.

Dans l'exemple non limitatif décrit ici d'une voie ferrée, lors de la phase de débruitage des ondes sismiques enregistrées, on enlève le bruit principal environnant du bruit sismique produit par le train 24. Ce bruit principal environnant est un bruit électrique lié aux caténaires dont on connaît les caractéristiques. On obtient ainsi un signal avec un rapport signal sur bruit amélioré.

Lors de la phase de filtrage en fréquence, on filtre le signal dans une bande de fréquences prédéterminée qui correspond à la fois à la bande d'émission estimée du train 24 et à la bande de fréquence d'intérêt, laquelle dépend de la profondeur d'intérêt de l'investigation du sous-sol sous la zone cible que constitue la voie ferrée 20.

En outre, entre la phase de débruitage et la phase de filtrage en fréquence, de façon optionnelle, on peut en outre effectuer une opération de blanchiment spectral et/ou une opération de binarisation.

L'opération de blanchiment spectral, appelé aussi égalisation spectrale, technique connue en soi, consiste à pondérer toutes les composantes fréquentielles du signal de telle façon qu'elles aient toutes la même représentation énergétique.

L'opération de binarisation, également connue en soi, consiste à attribuer une valeur -1 ou +1 à chaque valeur instantanée du signal, pour simplifier le signal.

D'autres types de prétraitements peuvent être appliqués.

A l'issue de l'étape 10 d'enregistrement et de l'étape 11 éventuelle de prétraitement des ondes sismiques enregistrées par les capteurs 22, une étape 12 de reconstruction d'un sismogramme de la zone cible est effectuée.

Cette étape 12 de reconstruction utilise les ondes sismiques enregistrées et éventuellement prétraitées et leur applique une technique d'interférométrie.

Cette technique d'interférométrie comporte par exemple au moins une opération d'intercorrélation de signaux issus des ondes sismiques respectivement enregistrées par les capteurs 220 et 221 pendant la période de temps prédéterminée où le train 24 passe sur la voie source 21. Cette technique d'interférométrie permet de reconstruire des trajets virtuels de propagation transverses, ici perpendiculaires, à la voie ferrée cible 20. Ces trajets virtuels de propagation caractérisent le sismogramme.

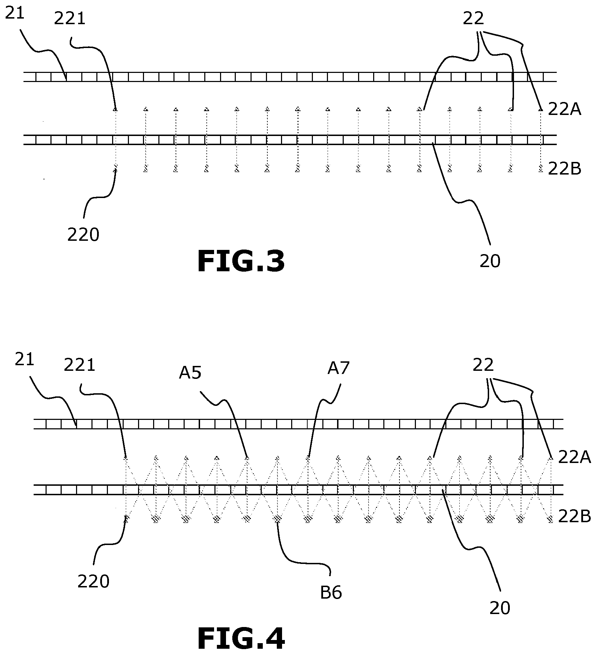

La figure 3 illustre schématiquement ces trajets virtuels de propagation pour chaque couple de capteurs en regard l'un de l'autre de part et d'autre de la voie ferrée cible 20.

En variante, toute autre technique d'interférométrie pourrait être appliquée lors de cette étape 12 de reconstruction, comme par exemple une méthode à base d'opérations de convolution en lieu et place des opérations d'intercorrélation susmentionnées.

Comme illustré par la figure 4, l'étape 12 de reconstruction peut être effectuée pour différents azimuts. En effet, on peut effectuer des opérations d'intercorrélation, non seulement entre les signaux issus des ondes sismiques enregistrées par les couples de capteurs situés en regard l'un de l'autre comme le couple de capteurs 220 et 221, mais également entre les couples de capteurs disposés de façon analogue aux capteurs A5 et B6 ou aux capteurs A7 et B6, c'est-à-dire les couples de capteurs pour lesquels la droite qui passe par les barycentres des deux capteurs du couple forme un angle non nul avec la perpendiculaire à la voie ferrée cible 20.

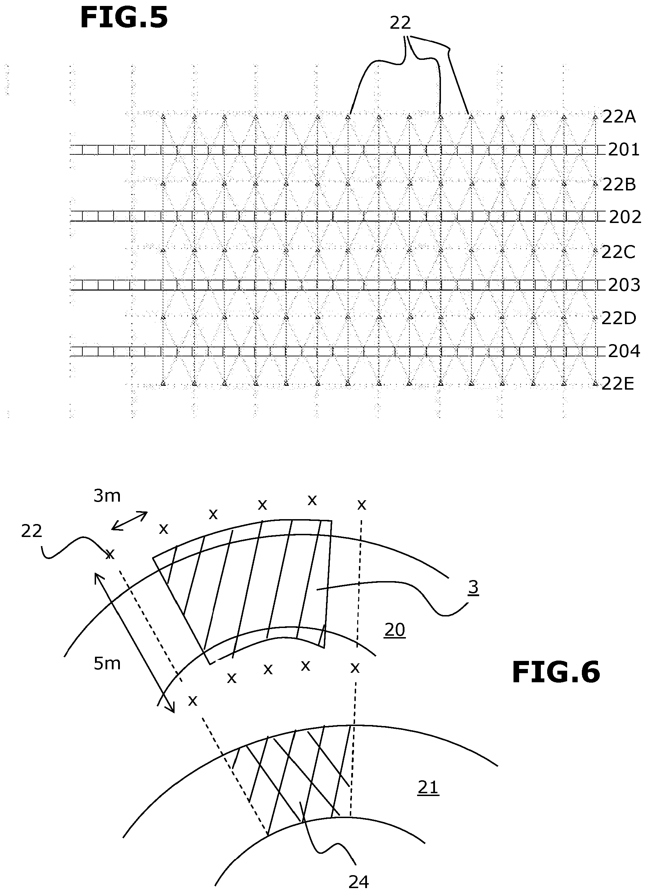

Par ailleurs, comme illustré par la figure 5, l'étape 12 de reconstruction peut être effectuée non seulement pour différents azimuts, mais en outre en utilisant plusieurs voies ferrées associées à des couples de capteurs. La voie source 21, parallèle aux voies 201 à 204, est située en regard de la « ligne récepteur 22A » comme sur les figures 2 à 4 mais pour simplifier, n'est pas représentée sur la figure 5.

Ainsi, lorsqu'un train passe sur la voie source 21, on peut reconstruire par interférométrie des trajets virtuels de propagation entre les lignes 22A et 22B et/ou entre les lignes 22B et 22C et/ou entre les lignes 22C et 22D et/ou entre les lignes 22D et 22E. Autrement dit, pour chaque couple de voies ferrées adjacentes, chaque voie ferrée permet une reconstruction d'un sismogramme de la zone située sous la voie ferrée adjacente, en utilisant les couples de capteurs déployés de part et d'autre de cette voie ferrée adjacente.

On a décrit ci-dessus la reconstruction de trajets virtuels de propagation transverses, c'est-à-dire transversaux à la voie ferrée, en utilisant la fenêtre temporelle dans laquelle le train 24 est aligné avec un couple de capteurs du type du couple 220, 221 : les couples de capteurs permettent d'étudier la variation de trajet du bruit sismique.

En variante, il est possible d'utiliser la corrélation, par convolution, entre deux capteurs de part et d'autre d'une voie et le signal émis par un train sur cette même voie. Ainsi, les variations temporelles des temps de propagation peuvent être utilisées en surveillance permanente, à des fins de mesure d'apparition d'anomalies.

En référence à la figure 1, à la suite de l'étape 12 de reconstruction, on peut, de façon optionnelle, effectuer une étape 13 d'addition ou « empilement » (en anglais « stacking ») de signaux reconstruits provenant d'ondes sismiques captées en provenance de plusieurs sources 24 de bruit sismiques mobiles.

Dans l'exemple non limitatif décrit ici où ces sources de bruit sont des trains, plusieurs trains circulant à des moments différents, ayant des longueurs et des vitesses différentes, qui vont donc être alignés avec un couple de capteurs du type du couple 220, 221 pendant des périodes de temps distinctes, vont fournir des signaux reconstruits similaires.

L'addition de ces signaux multiples permet d'améliorer le rapport signal sur bruit et donc, d'obtenir in fine une image de meilleure qualité du sous-sol sous la zone cible. Par ailleurs, cela permet de produire, pour un couple donné de capteurs du type du couple 220, 221, des trajets virtuels de propagation de façon ponctuelle ou périodique à une périodicité choisie, à savoir, quotidienne ou hebdomadaire ou encore mensuelle, par exemple.

Comme le montre la figure 1, à l'issue de l'étape 12 de reconstruction et de l'éventuelle étape 13 d'addition, on effectue une étape 14 de génération d'une image du sous-sol sous la zone cible, à partir du sismogramme reconstruit précédemment.

Lors de cette étape 14 de génération d'une image, les traitements diffèrent selon le type d'ondes sismiques enregistrées à l'étape 10. En effet, on peut enregistrer, soit des ondes de surface, soit des ondes réfractées, soit éventuellement des ondes réfléchies.

Dans un mode de réalisation où à l'étape 10, on enregistre des ondes sismiques de surface, on effectue les opérations suivantes pour obtenir une image du sous-sol sous la zone cible.

On détermine tout d'abord des courbes de dispersion des ondes de surface dans les signaux reconstruits, dans une bande de fréquences prédéterminée. A titre d'exemple non limitatif, cette bande de fréquences peut être la bande de 1 à 100 Hz.

De façon optionnelle, on peut ensuite sélectionner uniquement les maxima de ces courbes de dispersion.

Puis à partir des courbes de dispersion, on réalise une tomographie de la vitesse des signaux reconstruits.

Enfin, on effectue une inversion des vitesses d'ondes de surface des signaux reconstruits issus des ondes de surface, de façon à produire un modèle de vitesse des ondes de pression et de cisaillement, connues de l'homme du métier sous la dénomination d'ondes P et S.

Grâce à la répétition de ces opérations dans le temps, on obtient ainsi une image du sous-sol sous la zone cible qui évolue dans le temps, autrement dit, une représentation à quatre dimensions de cette zone du sous-sol.

Dans un autre mode de réalisation, où à l'étape 10, on enregistre des ondes sismiques réfractées, on effectue les opérations suivantes pour obtenir une image du sous-sol sous la zone cible.

On détermine tout d'abord les temps d'arrivée des signaux reconstruits du sismogramme, correspondant aux ondes sismiques réfractées.

Puis on réalise une tomographie des signaux reconstruits correspondant aux ondes réfractées P à partir de ces temps d'arrivée, de façon à produire un modèle de vitesse des ondes de pression, dites ondes P.

De même que dans le mode de réalisation où on enregistre des ondes sismiques de surface, grâce à la répétition de ces opérations dans le temps, on obtient ainsi une image du sous-sol sous la zone cible qui évolue dans le temps, autrement dit, une représentation à quatre dimensions de cette zone du sous-sol.

Dans encore un autre mode particulier de réalisation, on pourrait enregistrer à l'étape 10 des ondes sismiques réfléchies. Cela conduirait alors à obtenir une image de la réflectivité du sous-sol sous la zone cible.

Il est possible naturellement de cumuler les enregistrements des ondes réfractées avec les ondes de surface, ce qui accroît d'autant la résolution, tout comme intégrer le traitement des ondes réfléchies aux procédés précédents. En particulier, les signaux sont traités indépendamment jusqu'aux pointés, qui sont ensuite combinés, les pointés étant les courbes de dispersion pour les ondes de surface et les temps de première arrivée pour les ondes réfractées.

En particulier, de préférence et tel qu'illustré en figure 6, l'image du sous-sol cible 3 sous une voie ferrée 20, de largeur de l'ordre de 1,5 m, espacée d'une voie source 21 parallèle, peut être réalisée par deux lignes de capteurs de type accéléromètres classiques espacées de 5 m encadrant la voie ferrée 20, les capteurs 22 de chaque ligne étant séparés de 3 m, les capteurs étant disposés en quinconce pour homogénéiser la résolution de l'image tridimensionnelle obtenue par intercorrélation pour être à l'échelle de la voie. Le traitement des ondes de surface et réfractées permet d'atteindre une résolution de 2 m, voire moins. Si une résolution supérieure est demandée, un rapprochement des lignes de capteurs peut être mis en oeuvre, par exemple en associant directement les capteurs aux rails de la voie, c'est-à-dire en les espaçant de l'ordre de 1,5 m, et/ou en utilisant deux fibres optiques pour du DAS, créant ainsi des capteurs espacés de l'ordre de 60 cm.

Il est possible bien entendu d'ajouter au procédé selon l'invention une reconstruction similaire à celles décrites dans l'art antérieur, dans lequel des groupes de capteurs permettent d'analyser les courbes de dispersion des ondes sismiques, et augmenter encore la résolution et/ou la fiabilité de l'image : on reconstruit ainsi des trajets virtuels de propagation longitudinaux, c'est-à-dire parallèles à la voie ferrée, par exemple en utilisant des fenêtres temporelles de durée prédéterminée précédant et suivant le passage du train 24, respectivement après que les capteurs commencent à recevoir des ondes sismiques et avant que les capteurs cessent de recevoir des ondes sismiques.

Le procédé conforme à l'invention comporte une surveillance passive du sous-sol sous une zone cible au sens où il traite des ondes sismiques reçues, mais n'en produit pas. Néanmoins, on peut envisager de combiner les capteurs qui reçoivent les ondes sismiques avec des sources sismiques actives, pour appliquer des traitements du type décrits dans le document US-A-2017 052269.

## Revendications

1. Procédé de surveillance du sous-sol terrestre sous une zone cible, **caractérisé en ce que** la zone cible est une voie ferrée (20) ou une route ou
un autre ouvrage de génie civil, ou un bâtiment et que le procédé comporte des étapes suivant lesquelles :
on enregistre (10) des ondes sismiques provenant d'une source (24) de bruit sismique identifiée et mobile, au moyen d'au moins un couple (220, 221) de capteurs (22) disposés de part et d'autre de ladite zone cible, la source (24) se déplaçant à l'extérieur du segment formé par la disposition dudit au moins un couple de capteurs (220, 221) ;
on sélectionne des périodes temporelles correspondant aux alignements dudit au moins un couple (220, 221) de capteurs (22) avec ladite source (24) de bruit ;
on reconstruit (12) par interférométrie un sismogramme de la zone cible à partir desdites ondes sismiques enregistrées et des périodes temporelles sélectionnées ; et
on engendre (14) une image du sous-sol sous la zone cible à partir dudit sismogramme.

2. Procédé selon la revendication 1, **caractérisé en ce qu'**il comporte en outre, préalablement à l'étape (12) de reconstruction, une étape (11) de prétraitement des ondes sismiques enregistrées, notamment des opérations de débruitage et de filtrage en fréquence.

3. Procédé selon la revendication 2, **caractérisé en ce que** l'étape (11) de prétraitement comporte une opération de blanchiment spectral.

4. Procédé selon l'une quelconque des revendications précédentes, **caractérisé en ce que** lors de l'étape (12) de reconstruction par interférométrie, on effectue au moins une opération d'intercorrélation de signaux issus des ondes sismiques respectivement enregistrées par les deux capteurs dudit au moins un couple (220, 221) de capteurs.

5. Procédé selon l'une quelconque des revendications précédentes, **caractérisé en ce que** l'étape (10) d'enregistrement est effectuée de façon continue dans le temps.

6. Procédé selon l'une quelconque des revendications précédentes, **caractérisé en ce qu'**il comporte en outre, à la suite de l'étape (12) de reconstruction, une étape (13) d'addition de signaux reconstruits dudit sismogramme provenant de plusieurs sources de bruit mobiles respectivement alignées avec ledit au moins un couple (220, 221) de capteurs pendant des périodes de temps distinctes.

7. Procédé selon l'une quelconque des revendications précédentes, **caractérisé en ce que** lors de l'étape (10) d'enregistrement, on enregistre des ondes sismiques de surface.

8. Procédé selon la revendication 7, **caractérisé en ce que** lors de l'étape (14) de génération de ladite image :
on détermine des courbes de dispersion des ondes de surface dans les signaux reconstruits dudit sismogramme dans une bande de fréquences prédéterminée ;
on réalise une tomographie de la vitesse desdits signaux reconstruits à partir desdites courbes de dispersion ; et
on effectue une inversion des vitesses d'ondes de surface desdits signaux reconstruits, de façon à produire un modèle de vitesse d'ondes P et S.

9. Procédé selon l'une quelconque des revendications précédentes, **caractérisé en ce que** lors de l'étape (10) d'enregistrement, on enregistre des ondes sismiques réfractées.

10. Procédé selon la revendication 9, **caractérisé en ce que** lors de l'étape (14) de génération de ladite image :
on détermine les temps d'arrivée des signaux reconstruits dudit sismogramme correspondant auxdites ondes sismiques réfractées ; et
on réalise une tomographie desdits signaux reconstruits correspondant aux ondes réfractées P à partir desdits temps d'arrivée, de façon à produire un modèle de vitesse d'ondes P.

11. Procédé selon l'une quelconque des revendications précédentes, **caractérisé en ce que** lors de l'étape (10) d'enregistrement, on enregistre des ondes sismiques réfléchies.

12. Procédé selon l'une quelconque des revendications précédentes, **caractérisé en ce que** lesdits capteurs (22) disposés de part et d'autre de ladite zone cible sont placés selon au moins deux lignes, ou sur des grilles de forme carrée ou hexagonale, et/ou sont espacés régulièrement.

13. Procédé selon l'une quelconque des revendications précédentes, **caractérisé en ce que** ladite zone cible (3) est une première voie ferrée (20) et ladite source (24) est un train se déplaçant sur une deuxième voie ferrée (21) sensiblement parallèle à la première voie ferrée (20).

14. Dispositif de surveillance du sous-sol terrestre sous une zone cible, ladite zone cible étant une voie ferrée (20) ou une route ou un autre ouvrage de génie civil, ou un bâtiment, le dispositif comprenant :
au moins un couple (220, 221) de capteurs (22) destinés à être disposés de part et d'autre de ladite zone cible, et configurés pour enregistrer des ondes sismiques provenant d'une source (24) de bruit sismique identifiée et mobile qui se déplace à l'extérieur du segment formé par la disposition dudit couple de capteurs (220, 221) ;
un module adapté à réaliser les traitements d'un procédé selon l'une quelconque des revendications précédentes, ledit module étant configuré pour :
- sélectionner des périodes temporelles correspondant aux alignements des couples (220, 221) de capteurs (22) avec ladite source (24) de bruit ;
- reconstruire (12) par interférométrie un sismogramme de la zone cible à partir desdites ondes sismiques enregistrées et des périodes temporelles sélectionnées ; et
- engendrer (14) une image du sous-sol sous la zone cible à partir dudit sismogramme.

## Patentansprüche

1. Verfahren zur Überwachung des Erdbodens unter einem Zielgebiet, **dadurch gekennzeichnet, dass** das Zielgebiet eine Eisenbahnstrecke (20) oder eine Straße oder ein anderes Tiefbauwerk oder ein Gebäude ist und dass das Verfahren Schritte umfasst, gemäß denen:
seismische Wellen, die von einer identifizierten und beweglichen Quelle (24) seismischen Rauschens stammen, mittels mindestens eines Paars (220, 221) von Sensoren (22), die auf beiden Seiten des Zielgebiets angeordnet sind, aufgezeichnet werden (10), wobei sich die Quelle (24) außerhalb des Segments bewegt, das durch die Anordnung des mindestens einen Paars von Sensoren (220, 221) gebildet ist;
Zeitperioden ausgewählt werden, die den Ausrichtungen des mindestens einen Paars (220, 221) von Sensoren (22) mit der Quelle (24) von Rauschen entsprechen;
Rekonstruieren (12) durch Interferometrie eines Seismogramms des Zielgebiets anhand der aufgezeichneten seismischen Wellen und der gewählten Zeitperioden; und
Erzeugen (14) eines Bilds des Erdbodens unter dem Zielgebiet anhand des Seismogramms.

2. Verfahren nach Anspruch 1, **dadurch gekennzeichnet, dass** es ferner vor dem Schritt (12) eines Rekonstruierens einen Schritt (11) einer Vorverarbeitung der aufgezeichneten seismischen Wellen umfasst, insbesondere Vorgänge zur Rauschunterdrückung und Frequenzfilterung.

3. Verfahren nach Anspruch 2, **dadurch gekennzeichnet, dass** der Schritt (11) einer Vorverarbeitung einen spektralen Bleichvorgang umfasst.

4. Verfahren nach einem der vorherigen Ansprüche, **dadurch gekennzeichnet, dass** während des Schritts (12) eines Rekonstruierens durch Interferometrie mindestens ein Vorgang einer Kreuzkorrelation von Signalen durchgeführt wird, die von seismischen Wellen stammen, die jeweils von den beiden Sensoren des mindestens einen Paars (220, 221) von Sensoren aufgezeichnet werden.

5. Verfahren nach einem der vorherigen Ansprüche, **dadurch gekennzeichnet, dass** der Schritt (10) eines Aufzeichnens kontinuierlich in der Zeit durchgeführt wird.

6. Verfahren nach einem der vorherigen Ansprüche, **dadurch gekennzeichnet, dass** es ferner nach dem Schritt (12) eines Rekonstruierens einen Schritt (13) eines Hinzufügens von rekonstruierten Signalen des Seismogramms umfasst, die von mehreren beweglichen Rauschquellen stammen, die jeweils während unterschiedlicher Zeitperioden mit dem mindestens einen Paar (220, 221) von Sensoren ausgerichtet sind.

7. Verfahren nach einem der vorherigen Ansprüche, **dadurch gekennzeichnet, dass** während des Schritts (10) eines Aufzeichnens seismische Oberflächenwellen aufgezeichnet werden.

8. Verfahren nach Anspruch 7, **dadurch gekennzeichnet, dass** bei dem Schritt (14) eines Erzeugens des Bilds:
Dispersionskurven der Oberflächenwellen in den rekonstruierten Signalen des Seismogramms in einem vorbestimmten Frequenzband bestimmt werden;
eine Tomographie der Geschwindigkeit der genannten Signale durchgeführt wird, die aus den Dispersionskurven rekonstruiert werden; und
eine Inversion der Oberflächenwellengeschwindigkeiten der rekonstruierten Signale durchgeführt wird, um ein Geschwindigkeitsmodell der Wellen P und S zu erzeugen.

9. Verfahren nach einem der vorherigen Ansprüche, **dadurch gekennzeichnet, dass** während des Schritts (10) eines Aufzeichnens gebrochene seismische Wellen aufgezeichnet werden.

10. Verfahren nach Anspruch 9, **dadurch gekennzeichnet, dass** bei dem Schritt (14) eines Erzeugens des Bilds:
die Ankunftszeiten der rekonstruierten Signale des Seismogramms bestimmt werden, die den genannten gebrochenen seismischen Wellen entsprechen; und
eine Tomographie der rekonstruierten Signale, die den gebrochenen Wellen P entsprechen, anhand der Ankunftszeiten durchgeführt wird, um ein Geschwindigkeitsmodell der Wellen P zu erzeugen.

11. Verfahren nach einem der vorherigen Ansprüche, **dadurch gekennzeichnet, dass** während des Schritts (10) eines Aufzeichnens reflektierte seismische Wellen aufgezeichnet werden.

12. Verfahren nach einem der vorherigen Ansprüche, **dadurch gekennzeichnet, dass** die Sensoren (22), die auf beiden Seiten des Zielgebiets angeordnet sind, entlang mindestens zweier Linien oder auf quadratischen oder sechseckigen Gittern angeordnet sind und/oder in regelmäßigen Abständen angeordnet sind.

13. Verfahren nach einem der vorherigen Ansprüche, **dadurch gekennzeichnet, dass** das Zielgebiet (3) ein erstes Gleis (20) ist und die Quelle (24) ein Zug ist, der sich auf einem zweiten Gleis (21) bewegt, das im Wesentlichen parallel zu dem ersten Gleis (20) ist.

14. Vorrichtung zur Überwachung des Erdbodens unter einem Zielgebiet, wobei das Zielgebiet eine Eisenbahnstrecke (20) oder eine Straße oder ein anderes Tiefbauwerk oder ein Gebäude ist, die Vorrichtung umfassend:
mindestens ein Paar (220, 221) von Sensoren (22), die dazu bestimmt sind, auf beiden Seiten des Zielbereichs angeordnet zu sein, und die konfiguriert sind, um seismische Wellen aufzeichnen, die von einer identifizierten und beweglichen Quelle (24) seismischen Rauschens stammen, die sich außerhalb des Segments bewegt, das durch die Anordnung des Paars von Sensoren (220, 221) gebildet ist;
ein Modul, das angepasst ist, um die Verarbeitungen eines Verfahrens nach einem der vorherigen Ansprüche durchzuführen, wobei das Modul zu Folgendem konfiguriert ist:
- Auswählen von Zeitperioden, die den Ausrichtungen der Paare (220, 221) von Sensoren (22) mit der Quelle (24) von Rauschen entsprechen;
- Rekonstruieren (12) durch Interferometrie eines Seismogramms des Zielgebiets anhand der aufgezeichneten seismischen Wellen und der gewählten Zeitperioden; und
- Erzeugen (14) eines Bilds des Erdbodens unter dem Zielgebiet anhand des Seismogramms.

## Claims

1. A method for monitoring the subsoil of the earth under a target zone,
**characterized in that** the target zone is a railroad track (20) or a road or another civil engineering structure, or a building, and **in that** the method comprises the following steps:
recording (10) seismic waves coming from an identified and mobile source (24) of seismic noise, using at least one pair (220, 221) of sensors (22), which are arranged on both sides of said target zone, the source (24) moving outside the segment formed by the arrangement of said at least one pair of sensors (220, 221);
selecting periods of time corresponding to the alignments of said at least one pair (220, 221) of sensors (22) with said noise source (24);
reconstructing (12) a seismogram of the target zone by interferometry based on said recorded seismic waves and the selected periods of time; and
generating (14) an image of the subsoil under the target zone using said seismogram.

2. The method according to claim 1, **characterized in that** it further comprises, prior to the reconstruction step (12), a step (11) for pre-processing the recorded seismic waves, in particular denoising and frequency filtering operations.

3. The method according to claim 2, **characterized in that** the pre-processing step (11) comprises a spectral whitening operation.

4. The method according to any one of the preceding claims, **characterized in that** during the step (12) for reconstruction by interferometry, at least one operation is carried out for intercorrelation of signals coming from the seismic waves respectively recorded by the two sensors of said at least one pair (220, 221) of sensors.

5. The method according to any one of the preceding claims, **characterized in that** the recording step (10) is carried out continuously over time.

6. The method according to any one of the preceding claims, **characterized in that** it further comprises, following the reconstruction step (12), a step (13) for addition of reconstructed signals from said seismogram coming from several mobile noise sources respectively aligned with said at least one pair (220, 221) of sensors during separate periods of time.

7. The method according to any one of the preceding claims, **characterized in that** during the recording step (10), seismic surface waves are recorded.

8. The method according to claim 7, **characterized in that** the step (14) for generating said image comprises:
determining dispersion curves of the surface waves in the reconstructed signals of the seismogram within a predetermined band of frequencies;
carrying out a tomography of the speed of said reconstructed signals from said dispersion curves; and
carrying out an inversion of the surface wave speeds of said reconstructed signals to produce a speed model of P- and S-waves.

9. The method according to any one of the preceding claims, **characterized in that** during the recording step (10), refracted seismic waves are recorded.

10. The method according to claim 9, **characterized in that** the step (14) for generating said image comprises:
determining the time of arrival of the reconstructed signals of said seismogram corresponding to said refracted seismic waves; and
performing a tomography of said reconstructed signals corresponding to the refracted P-waves based on said times of arrival, so as to produce a speed model of P-waves.

11. The method according to any one of the preceding claims, **characterized in that** during the recording step (10), reflected seismic waves are recorded.

12. The method according to any one of the preceding claims, **characterized in that** said sensors (22) arranged on both sides of said target zone are placed in at least two rows, or on square or hexagonal grids, and/or are regularly spaced.

13. The method according to any one of the preceding claims, **characterized in that** said target zone (3) is a first railroad track (20) and said source (24) is a train traveling over a second railroad track (21) substantially parallel to the first railroad track (20).

14. A device for monitoring the subsoil of the earth under a target zone, said target zone being a railroad track (20) or a road or another civil engineering structure, or a building, the device comprising:
at least one pair (220, 221) of sensors (22) intended to be arranged on both sides of said target zone, and configured to record seismic waves coming from an identified and mobile source (24) of seismic noise which moves outside the segment formed by the arrangement of said pair (220, 221) of sensors;
a module suitable for performing the processing of a method according to any one of the preceding claims, said module being configured to:
- select periods of time corresponding to the alignments of the pairs (220, 221) of sensors (22) with said noise source (24);
- reconstruct (12) a seismogram of the target zone by interferometry based on said recorded seismic waves and the selected periods of time; and
- generate (14) an image of the subsoil under the target zone using said seismogram.
